# EUROPÄISCHE PATENTANMELDUNG

(11) **EP 1 002 503 A2**
(43) Veröffentlichungstag der Anmeldung: **24.05.2000**
(21) Anmeldenummer: 99120930.5
(22) Anmeldetag: 02.11.1999
(51) Int. Cl.: A61C 17/26

(54) **Bürstenteil für elektrische Zahnbürste**

(30) Priorität: 02.11.1998 DE 29819500 U; 02.11.1998 DE 29819663 U; 15.06.1999 DE 19927297; 04.05.1999 DE 19920471
(71) Anmelder: Hofmann, Raimund, D-6983 Kreuzwertheim (DE)
(72) Erfinder: Hofmann, Raimund, 97892 Kreuzwertheim (DE); Hofmann, Jörg, 97892 Kreuzwertheim (DE)
(74) Vertreter: Reinhard - Skuhra - Weise & Partner

(57) **Zusammenfassung**

Die vorliegende Erfindung schafft ein Bürstenteil für eine elektrische Zahnburste mit einem mit einem Griffteil (30) verbindbaren Schaft (40), welcher eine Längsbohrung (49) und eine Querbohrung (46) aufweist; einer mit einer Welle (2) des Griffteils (30) verbindbaren Achse (3), welche in der Längsbohrung (49) drehfähig aufnehmbar ist; einem Bürstenkopf (80), welcher in der Querbohrung (46) drehfähig aufnehmbar ist; und Übertragungsmitteln (17, 86) zum Überstragen der Drehbewegung der Achse (3) auf den Bürstenkopf (80). Der Bürstenkopf (80) ist in der Querbohrung (46) mittels eines verrastbaren Gleitlagers gelagert, welches eine entsprechende axiale Fixierung bewirkt, und/oder die Achse (3) ist in der Langsbohrung (49) mittels eines verrastbaren Gleitlagers (35, 44; 88) gelagert.

## Beschreibung

### STAND DER TECHNIK

Die vorliegende Erfindung betrifft ein Bürstenteil für eine elektrische Zahnbürste mit einem mit einem Griffteil verbindbaren Schaft, welcher eine Längsbohrung und eine Querbohrung aufweist; einer mit einer Welle des "Griffteils verbindbaren Achse, welche in der Längsbohrung drehfähig aufnehmbar ist; einem Bürstenkopf, welcher in der Querbohrung drehfähig aufnehmbar ist; Übertragungsmitteln zum Übertragen der Drehbewegung der Achse auf den Bürstenkopf.

Solche Bürstenteile für elektrische Zahnbürsten werden heutzutage in großer Vielzahl auf dem Markt angeboten. Die bekannten Bürstenteile sind dabei speziell jeweiligen Griffteilen zugeordnet und angepaßt. Damit ergibt sich, daß die von den verschiedenen Herstellern gefertigten Bürstenteile nicht untereinander austauschbar sind, sondern jeweils nur zu einem speziellen Griffteil passen.

Die marktüblichen Bürstenteile bestehen aus mehreren unterschiedlichen Einzelteilen, welche aus verschiedenen Materialien gefertigt sind. Insbesondere findet man in der Regel Spritzgußteile und Metallteile. Diese Teilevielfalt erhöht einerseits die Herstellungskosten und kompliziert den Zusammenbau. Außerdem sind die bekannten Bürstenteile derart gestaltet, daß sie bei Defekt eines Bestandteils nicht repariert werden können, sondern als Ganzes ausgetauscht werden müssen.

Zahnbürsten haben weiterhin die Eigenschaft. in ihren Feuchtraumen das Wachsen von Keimen zu begünstigen. Um dem zu begegnen, setzt man im Bereich der Borsten oligodynamische Materialien ein, und zwar ublicherweise in Form von galvanischen Überzügen oder Klemmitteln.

Aus der DE 39 37 853 A1 ist eine elektrische Zahnbürste bekannt, welche ein Griffteil mit einem elektromotorischen Antrieb und einer Antriebswelle sowie ein Bürstenteil mit einer in einem Gehäuse bzw. Schaft gelagerten Achse aufweist, wobei das Bürstenteil mit dem Griffteil über Kupplungsmittel zur Festlegung des Bürstenteils am Griffteil und zur Kopplung der Antriebswelle mit der Achse verbindbar ist.

Insbesondere offenbart die DE 3937853 A1 eine Festlegung das Bürstenteils am Griffteil in axialer und radialer Richtung jeweils durch separate Kupplungsmittel, wobei einerseits Kupplungsmittel der Antriebswelle und der Achse und andererseits Kupplungsmittel des Schaftes des Bürstenteils und des Griffteils zusammenwirken. Die Axialsicherung erfolgt mittels Rastmittel der Achse, welche in ein Widerlager der Antriebswelle eingreifen. Die Radialsicherung erfolgt über ein bestimmtes Profil von Schaft und Kopf des Griffteils.

Aus der DE 33 46 758 A1 ist es bekannt, eine Kegelradverbindung bzw. Zahnszangenverbindung zwischen dem Bürstenkopf und der Achse des Bürstenteils vorzusehen.

Marktüblich sind auch komplizierte Kippstangen-Konstruktionen zur Übertragung der Drehbewegung der Achse auf den Bürstenkopf. Diese Konstruktionen sind nicht nur schwer zusammenfügbar, sondern weisen auch viele Einzelteile auf.

Ein weiterer Nachteil der bekannten Bürstenkopfe liegt darin, daß der Zahnbelag mit Hilfe von rotierenden Borsten nur schwer entfernbar ist.

Eine Aufgabe der vorliegenden Erfindung besteht darin, ein vereinfachtes Bürstenteil für eine elektrische Zahnbürste zu schaffen, welches in einem vereinfachten Fertigungsprozeß zusammengebaut werden kann und welches eine verbesserte Reinigungswirkung aufweist.

Insbesondere soll die Anzahl der Einzelteile verringert werden. Weiterhin soll ein Bürstenteil geschaffen werden, das auf verschiedenen Griffteilen unterschiedlicher Hersteller ohne einen zusätzlichen Adapter befestigbar ist.

### VORTEILE DER ERFINDUNG

Die Erfindung schafft ein Bürstenteil nach Anspruch 1.

Eine der vorliegenden Erfindung zugrundeliegende Idee besteht darin, daß der Bürstenkopf in der Querbohrung mittels eines verrastbaren Gleitlagers gelagert ist, welches eine entsprechende axiale Fixierung bewirkt, wobei das Gleitlager eine derart aufgerauhte Oberflache aufweist, daß eine axiale Pendelbewegung ermöglicht ist.

Ein wesentlicher Vorteil des erfindungsgemäßen Bürstenteils besteht darin, daß die Anzahl der Einzelteile durch Integration verringert ist. Die Verwendung eines oder mehrerer rastbarer Gleitlager vereinfacht den Zusammenbau. Die Entfernung des Zahnbelags wird durch die axiale Pendelbewegung, welche der radialen Bewegung des Bürstenkopfes überlagert ist, wirksam unterstützt. Die Borsten werden somit in eine auf den Zahnbelag stoßende Bewegung versetzt, wodurch der Zahnbelag aufgerissen wird und leichter entfernbar ist.

Weiterhin können die Bestandteile des erfindungsgemäßen Bürstenteils austauschbar gestaltet werden, so daß beispielsweise der Bürstenkopf ersetzbar ist, ohne daß das gesamte Bürstenteil ausgetauscht werden muß.

In den Unteransprüchen finden sich vorteilhafte Weiterbildungen und Verbesserungen des in Anspruch 1 angegebenen Bürstenteils.

Eine weitere Idee der vorliegenden Erfindung besteht darin, das Bürstenteil mittels einer hohlen Achse klemmend über die Antriebswelle des Griffteils zu schieben und in axialer Richtung mittels eines in axialer Richtung verschiebbaren, über Rastelemente verformbaren Klemmstopfen auf einem vorstehenden Gehäuse oder Gehäuseteil festzuklemmen.
Die Rotationsbewegungen der Metallachse des Griffteils werden durch die Klemmung der Bürstenachse übertragen, die radiale und axiale Festlegung des Bürstenteils wird durch die Festklemmung mittels des elastischen, verfornbaren Stopfen erreicht.
Damit entfallen sonst notwendige Kupplungsmittel zwischen Metallachse des Griffteils und Achse des Bürstenteils.
Ein Vorteil dieser Erfindung ist, dass bei einem notwendigen Austausch des Bürstenteils der Verbraucher nur Einzelteile wechselt und nicht das gesamte Bürstenteil wechseln muss.

### ZEICHNUNGEN

Ausführungsbeispiele der Erfindung sind in den Zeichnungen dargestellt und in der nachfolgenden Beschreibung naher erläutert.

Es zeigen:
- Fig. 1: eine schematische Darstellung des Schafts einer Ausführungsform des erfindungsgemäßen Bürstenteils in Draufsicht in Richtung der Querbohrung;
- Fig. 2: eine schematische Darstellung des Schafts der Ausführungsform des erfindungsgemäßen Bürstenteils in Draufsicht in Richtung senkrecht zu der Querbohrung, Fig. 2a eine entsprechende Draufsicht in Richtung des Pfeils D und Fig. 2b eine entsprechende Draufsicht in Richtung des Pfeils E;
- Fig. 3: eine schematische Darstellung des Klemmringes der Ausführungsform des erfindungsgemäßen Bürstenteils, und zwar Fig. 3a im Schnitt, Fig. 3b eine entsprechende Draufsicht in Richtung des Pfeils I, Fig. 3c eine entsprechende Draufsicht in Richtung des Pfeils J und Fig. 3d eine entsprechende perspektivische Ansicht;
- Fig. 4: eine schematische Darstellung der Achse der Ausführungsform des erfindungsgemäßen Bürstenteils, Fig. 4a eine entsprechende Draufsicht in Richtung des Pfeils G, Fig. 4b ein Schnitt in Richtung des Pfeils A und Fig. 4c eine entsprechende Draufsieht in Richtung des. Pfeils F;
- Fig. 5: eine schematische Darstellung des Bürstenkopfes der Ausführungsform des erfindungsgemäßen Bürstenteils, und zwar Fig. 5a in Seitenansicht auf die Brücke, Fig. 5b in Oberansicht auf die Brücke und Fig. 5c in Seitenansicht parallel zur Brücke;
- Fig. 6: eine schematische Darstellung des zusammengebauten Zustandes der Ausführungsform des erfindungsgemäßen Bürstenteils, aufgesetzt auf ein entsprechendes Griffteil;
- Fig. 7: eine stark vergrößerte schematische Darstellung des Bürstenkopfes der Ausführungsform des erfindungsgemäßen Bürstenteils, und zwar Fig. 7a in Seitenansicht auf die Brücke und Fig. 7b eine vereinfachte Darstellung zur Illustration der Wirksamkeit der aufgerauhten Oberflache des Gleitlagers;
- Fig. 8: eine schematische Darstellung der Achse einer weiteren Ausführungsform des erfindungsgemäßen Bürstenteils, und zwar Fig. 8a eine Seitenansicht und Fig. 8b eine entsprechende Draufsicht in Richtung des Pfeils O;
- Fig. 9: eine schematische Darstellung des Klemmringes einer weiteren Ausführungsform des erfindungsgemäßen Bürstenteils, und zwar Fig. 9a im Schnitt, Fig. 9b eine entsprechende Draufsicht in Richtung des Pfeils P und Fig. 9c eine entsprechende perspektivische Ansicht;
- Fig. 10a-h: Beispiele für verschiedene Bürstenteil-Formen;
- Fig. 11a-c: eine schematische Darstellung des zusammengebauten Zustandes einer weiteren Ausführungsform des erfindungsgemäßen Bürstenteils; und
- Fig. 12: eine Draufsicht auf das Kardangelenk nach Fig. 11c.
- Fig. 13: eine schematische Darstellung des Klemmstopfens des Bürstenteils mit oben und unten angelängten rastenden Klemmitteln und Rippen, die in radialer Richtung wirken;
- Fig. 14: eine schematische Darstellung der Gehäusehülse der Ausführungsform des erfindungsgemäßen Bürstenteils im Schnitt,

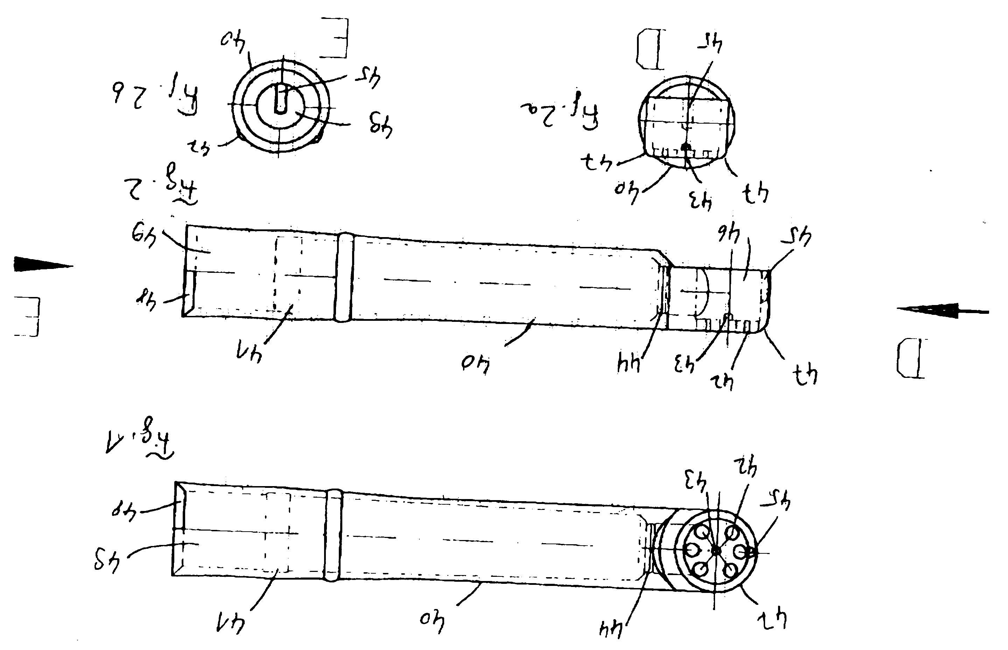

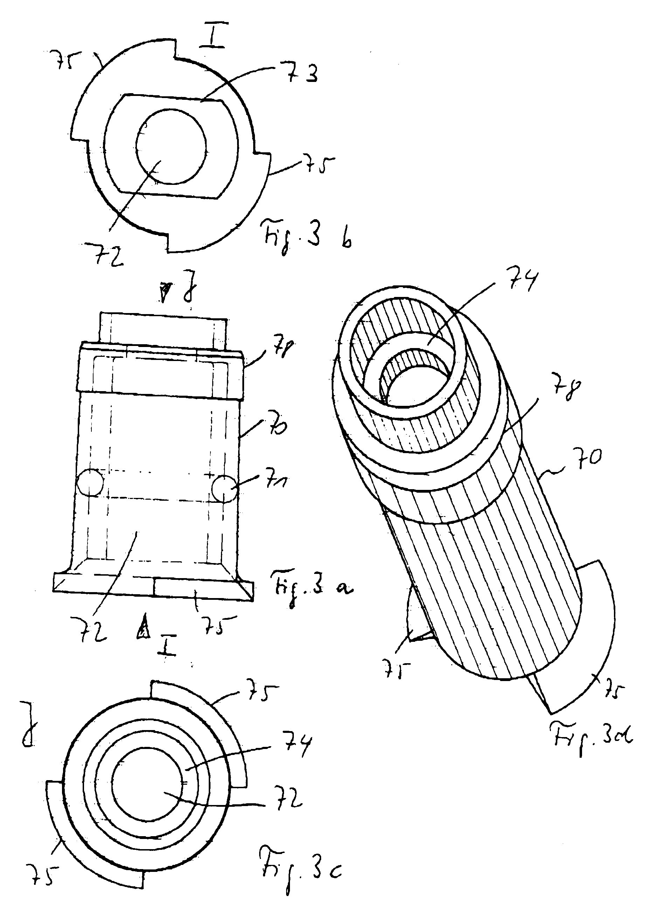

Fig. 2a einen senkrecht Schnitt und
Fig. 2b einen waagrechten Schnitt zum Klemmstopfen;
- Fig. 15: eine schematische Darstellung des Klemmstopfens des Bürstenteils mit den angelängten rastenden Klemmmmitteln in Draufsicht versetzt nach rechts bis zur Innenkante der Aussparung der Gehäusehülse.,

### BESCHREIBUNG DER AUSFÜHRUNGSBEISPIELE

In den Figuren bezeichnen gleiche Bezugszeichen gleiche oder funktionsgleiche Elemente.

Fig. 1 zeigt eine schematische Darstellung des Schafts einer Ausführungsform des erfindungsgemäßen Bürstenteils in Draufsicht in Richtung der Querbohrung, und Fig. 2 zeigt eine schematische Darstellung des Schafts der Ausführungsform des erfindungsgemäßen Bürstenteils in Draufsicht in Richtung senkrecht zu der Querbohrung, Fig. 2a eine entsprechende Draufsicht in Richtung des Pfeils D und Fig. 2b eine entsprechende Draufsicht in Richtung des Pfeils E.

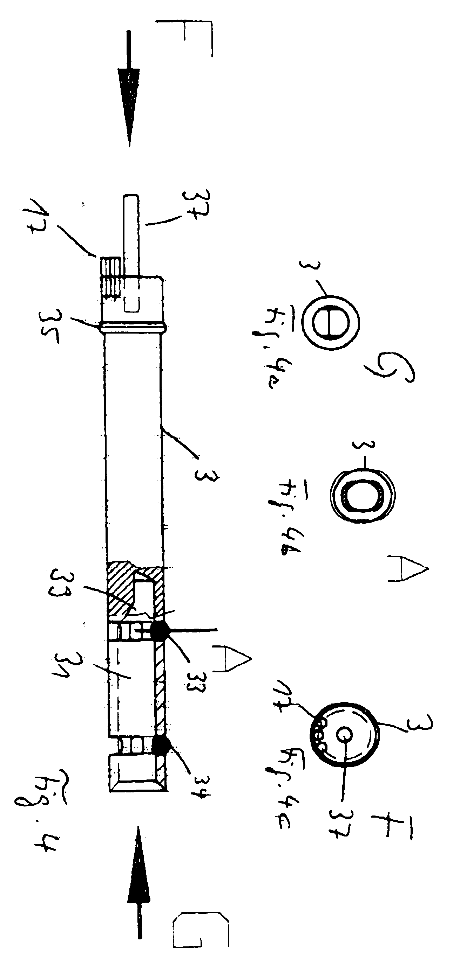

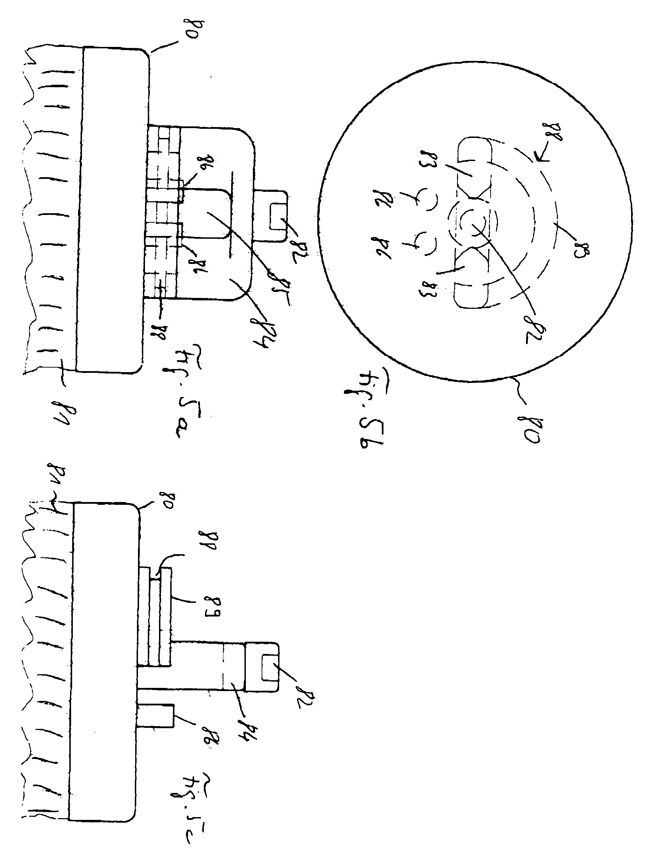

Es bezeichnen 40 einen Schaft bzw. ein Gehäuse, 41 eine ringförmige Aussparung für eine Wulst 78 (vgl. Fig. 3), 42 Löcher, 43 einen Stift, 44 einen Paßsitz für eine Wulst 35 (vgl. Fig. 4), 45 eine Nut und/oder- Bohrung; 46 eine Querbohrung, 47 einen Vorderbereich, 48 eine Ausnehmung für eine Fahne 75 (vgl Fig. 3) und 49 eine Längebohrung.

Der bei dieser Ausführungsform des erfindungsgemäßen Bürstenteils verwendete Schaft 40 ist ein einteiliges Spritzguß-Gehauseteil, welches in seinem Inneren die vom Hinterende bis zum Vorderbereich 47 durchgehende Längsbohrung 49 aufweist. Im Hinterbereich ist die ringförmige Nut 41 vorgesehen, welche zur Verrastung eines später zu beschreibenden Klemmrings verwendet wird.

Der mit 44 bezeichnete Paßsitz dient zur Verrastung mit einer entsprechenden Wulst, der in den Schaft 40 einzufuhrenden Achse. An dieser Stelle verengt sich der Querschnitt der Längsbohrung. Der Paßsitz 44 hat einen kreisformig verlaufenden Rand, was eine Verrastung der Wulst der Achse in radialer Richtung gewährleistet, wobei eine axiale Drehung der Achse uneingeschrankt möglich bleibt.

Im wesentlichen senkrecht zur Langsbohrung 49 angeordnet ist die Querbohrung 46. Der Bodenbereich der Bohrung weist die Löcher 42 auf, damit Zahnpasta und Wasser diesen Bereich des Schaftes 40 gut spülen können und keine Rückstände zurückbleiben, welche die Funktion beeinträchtigen konnten oder die Keimbildung fordern konnten. Die Querbohrung 46 dient zur Aufnahme des später zu beschreibenden Bürstenkopfes. Am Boden der Querbohrung 46 vorgesehen ist der Stift 43, welcher in eine entsprechende Lagerbuchse des Bürstenkopfes paßt.

Eingearbeitet in den Vorderbereich 47 des Schaftes 40 in die Wand der Querbohrung 46 ist weiterhin die Nut 45, welche zur Aufnahme einer stiftartigen Verlängerung der Achse dient.

Fig. 3 zeigt eine schematische Darstellung des Klemmringes der Ausführungsform des erfindungsgemäßen Bürstenteils, und zwar Fig. 3a im Schnitt, Fig. 3b eine entsprechende Draufsicht in Richtung des Pfeils I, Fig. 3c eine entsprechende Draufsicht in Richtung des Pfeils J und Fig. 3d eine entsprechende perspektivische Ansicht.

Zusätzlich zu den bereits eingeführten Elementen bezeichnen 70 einen Klemmring, 71 ein elastisches ringförmiges und/oder segmentiertes Anformungsteil, 72 einen Innenraum bzw. eine Innenbohrung, 73 eine Abflachung, 74 eine Lagerbuchse, 75 eine Fahne und 78 eine Wulst.

Dargestellt in Figur 3 ist der Klemmring 70, welcher in den Hinterbereich des Schaftes 40 einführbar und dort verrastbar ist. Zur Verrastung dient die radial umlaufende Wulst 78, welche in die Nut 41 des Schaftes 40 eingreift. Angelenkt an der Hinterseite des Klemmrings sind die zwei Fahnen 75, welche in entsprechende Ausnehmungen 48 des Schaftes formschlussig passen. Auf der Vorderseite des Klemmrings 70 ist die Lagerbuchse 74 vorgesehen, in die das Hinterende der weiter unten beschriebenen Achse paßt.

Wie aus Figur 3a ersichtlich, ist im hohlen Innenraum 72 des Klemmrings ein elastisches Anformteil 71 vorgesehen, welches mit dem Griffteil-Kopf 30 eines dort einzuführenden Griffteils in Eingriff tritt. Des weiteren weist die Innenbohrung 72 eine Abflachung 73 auf, welche formschlüssig auf einer entsprechenden Abflachung des Kopfes 30 sitzt, so daß eine gegenseitige radiale Verdrehung verhindert ist.

Die Fahnen 75 weisen eine vom Rest des Klemmrings 70 abweichende Farbe auf, so daß im eingesetzten Zustand der Schaft 40 farblich für unterschiedliche Benutzer gekennzeichnet ist.

Fig. 4 zeigt eine schematische Darstellung der Achse der Ausführungsform des erfindungsgemäßen Bürstenteils, Fig. 4a eine entsprechende Draufsicht in Richtung des Pfeils G, Fig. 4b ein Schnitt in Richtung des Pfeils A und Fig. 4c eine entsprechende Draufsicht in Richtung des Pfeils F.

Zusätzlich zu den bereits eingeführten Elementen bezeichnen 3 eine Achse, 33 und 34 ein elastisches Anformteil in Form zweier Klemmringe und/oder Klemmsegmente, 35 eine Wulst, 37 einen Stift, 17 Zahnstangen, 31 eine Ausnehmung und 39 eine Anschrägung.

Die in Figur 4 dargestellte Achse 3 ist ebenfalls bei diesem Beispiel ein einteilig hergestelltes Spritzgußteil, wobei allerdings für die elastischen Anformungen 33, 34 ein unterschiedlicher Kunststoff verwendet wird. Die Wulst 35 verrastet im eingeführten Zustand im Paßsitz 44 des Schafts 40, wodurch ein verrastetes Gleitlager gebildet wird. Die am Vorderende befindlichen Zahnstangen 17 wirken mit entsprechenden Zahnstangen zusammen, welche am später zu beschreibenden Bürstenkopf vorgesehen sind. Im Hinterbereich der Achse 3 ist eine Ausnehmung bzw. Bohrung 31 vorgesehen, in welche eine Motorwelle eines entsprechenden Griffteils einfuhrbar ist.

Die Ausnehmung 31 weist in ihrem Vorderbereich eine Anschrägung 39 auf, welche dem Übergang der Motorwelle von einem Vollkreisprofil zu einem Halbkreisprofil entspricht. Somit ist die Motorwelle in ihrem Vorderbereich axial formschlussig lagerbar. Angeformt im Hinterbereich der Achse, nämlich in einem zweikomponentigen Spritzgußverfahren, sind elastische Ringe 33, 34, welche eine elastische Klemmwirkung auf die Motorwelle ausüben, so daß eine axiale Fixierung ermöglicht ist. Insbesondere der vordere Ring 33 ist derart vorgesehen, daß er in die marktübliche Kerbe der Motorwelle 2 eingreifen kann. Die Elastizität der angeformten Teile unterscheidet sich von derjenigen der Achse 3 insofern, als daß sie zur Ermöglichung einer flexiblen Anpassung größer ist.

In axialer Richtung betrachtet, nämlich von Punkt F oder Punkt G, läßt sich erkennen, daß die Achse 3 eine im wesentlichen kreisformige Symmetrie aufweist.

Obwohl der Stift 37 bei diesem Ausführungsbeispiel einteilig mit der Achse 3 hergestellt ist, kann es sich dabei um einen Metallstift in Form eines Einsetzteils handeln, und zwar aus Gründen der größeren Festigkeit, denn dieser Stift 37 soll im zusammengebauten Zustand eine Fixierung des Bürstenkopfes 80 in Axialrichtung der Querbohrung 46 bewirken.

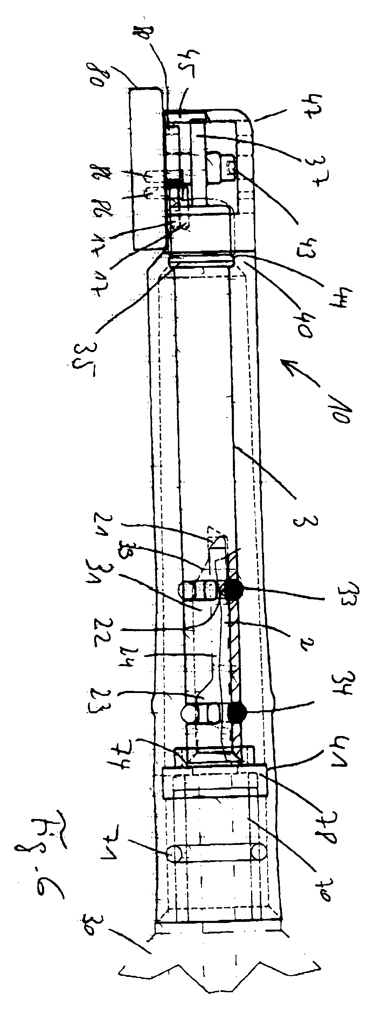

Fig. 5 zeigt eine schematische Darstellung des Bürstenkopfes der Ausführungsform des erfindungsgemäßen Bürstenteils, und zwar Fig. 5a in Seitenansicht auf die Brücke, Fig. 5b in Oberansicht auf die Brücke und Fig. 5c in Seitenansicht parallel zur Brücke.

Zusätzlich zu den bereits eingeführten Elementen bezeichnen 80 eine Bürstenkopf, 81 Borsten, 82 eine Lagerbuchse für den Stift 43, 83 Anschlage, 84 ein Brückenteil, 85 ein Loch für den Stift 37, 86 Zahnstangen, 88 eine Nut und 89 eine halbkreisförmige Rippe.

Der in Figur 5 dargestellte Bürstenkopf 80 weist an seiner einen Seite Borsten 81 auf, die mit einem entsprechenden Kleber in ublicher Art und Weise eingeklebt sind bzw. mechanisch eingeflochten sind.

An der den Borsten 81 abgewandten Seite des Bürstenkopfes 80 ist ein Brückenteil 84 vorgesehen, welches ein Loch 85 zur Durchführung des Stiftes 37 der Achse 3 im zusammengebauten Zustand bildet.

Die Anschläge 83 dienen zur Begrenzung der Drehbewegung und sind einteilig mit einer Rippe 89 ausgebildet, die eine halbkreisförmige Gestalt aufweist. Die Anschlage 83 stoßen in ihren Endlagen an die stiftartige Verlängerung 87 der Achse 3.

An der Oberseite der Brucke 84 ist eine Lagerbuchse 82 vorgesehen, in die der Stift 43 des Vorderteils 47 des Schaftes 40 eingreift.

Wie aus Figur 5c ersichtlich, ist in der Rippe 89 eine Nut 88 vorgesehen, in die ein in den Figuren nicht dargestellter uberstehender Rand der Querbohrung 46 eingreifen kann, um so ein rastbares Gleitlager zu realisieren.

Die Zahnstangen 86 wirken mit den Zahnstangen 17 der Achse 3 zusammen.

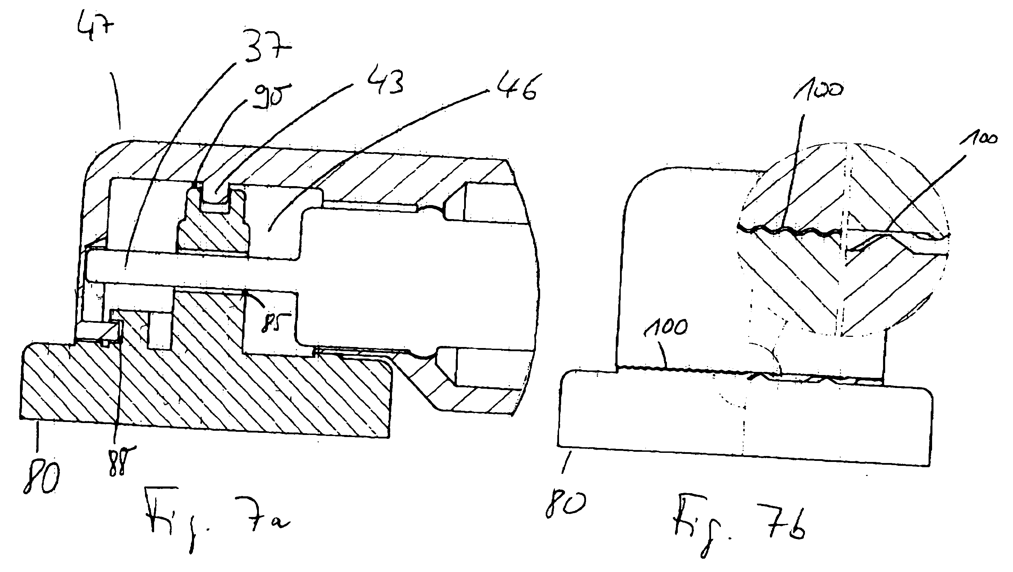

Fig. 6 zeigt eine schematische Darstellung des zusammengebauten Zustandes der Ausführungsform des erfindungsgemäßen Bürstenteils, aufgesetzt auf ein entsprechendes Griffteil.

Zusätzlich zu den bereits eingeführten Elementen bezeichnen 2 eine Motorwelle, 21 eine Anschrägung, 22 eine Kerbe, 23 eine Vollkreisprofil, 24 ein Halbkreisprofil, 10 das Bürstenteil insgesamt und 30 einen Griffteil-Kopf.

In Fig. 6 sind aus Gründen der Übersichtlichkeit nicht alle vorstehend definierten Elemente gekennzeichnet.

Im Zusammenhang mit Figur 6 werden insbesondere der Zusammenbau und die Funktion der Ausführungsform des erfindungsgemäßen Bürstenteils beschrieben.

Zunächst wird der Bürstenkopf 80 in den Vorderbereich 47 des Schaftes 40 eingeführt und über die Nut 88 mit dem nicht gezeigten oberen Randbereich verrasten. Damit ist der Kopf 80 in einem Gleitlager drehbar im Vorderbereich gelagert. Als nächstes wird die Achse 3 vom Hinterende des Schafts 40 derart eingeführt, daß die Wulst 35 im Paßsitz 44 verrastet und der Stift 37 durch das Loch 85 des Brückenteils 84 bis zur Nut 45 verläuft. Im Zusammenwirken mit den beiden Anschlägen 83 sind nunmehr Endlagen für die Drehung des Bürstenkopfes 80 im Vorderbereich 47 des Schaftes 40 definiert. Des weiteren treten die beiden Zahnstangen 17 im Vorderbereich der Achse 3 in Eingriff mit den beiden Zahnstangen 86, welche im Kopf integriert sind. So wird die Drehbewegung der Achse 3 in eine dazu senkrechte Drehbewegung des Kopfes 80 übertragen.

Eingeführt in den Hinterbereich des Schaftes 40 wird der Klemmring 70. Dabei gerät das Hinterende der Achse 3 in die Lagerbuchse 74 des Klemmrings und ist dort ebenfalls drehbar gelagert.

Durch diese drei Zusammenbauschritte wird diese Ausführungsform des erfindungsgemäßen Bürstenteils leicht zusammengebaut bzw. auseinandergebaut. Insbesondere ist es prinzipiell ohne Fachkenntnisse möglich, das Bürstenteil auseinanderzubauen, um beispielsweise den Bürstenkopf 80 auszutauschen.

Der Kopf des Griffteils 30 zusammen mit der daraus vorstehenden motorgetriebenen Welle 2 wird dann in den Klemmring 70 eingeführt, wobei die Orientierung durch die Abflachung 73 des Klemmrings vorgegeben ist. Dabei gerät die Motorwelle 2 in die Ausnehmung 31 der Achse 3 und wird von den elastischen Ringeinsätzen 33, 34 in axialer Richtung gehaltert. Oberhalb der Anschrägung 39 liegt der halbkreisprofilförmige Bereich der Welle 2 formschlüssig auf der Ausnehmung, so daß eine exakte Übertragung der Drehbewegung auf die Achse 3 gewährleistet ist. Der Vorderring 33 greift in die Kerbe 22 der Welle 2 ein. Wie aus der Figur ersichtlich, ermöglicht dieser Aufbau eine Anpassung verschiedener Dicken und Längen der Motorwelle sowie verschiedener geometrischer Formen. Dar Kopf 30 des Griffteils ist zusätzlich gegen eine axiale Verschiebung durch den elastischen Ring 71 fixiert.

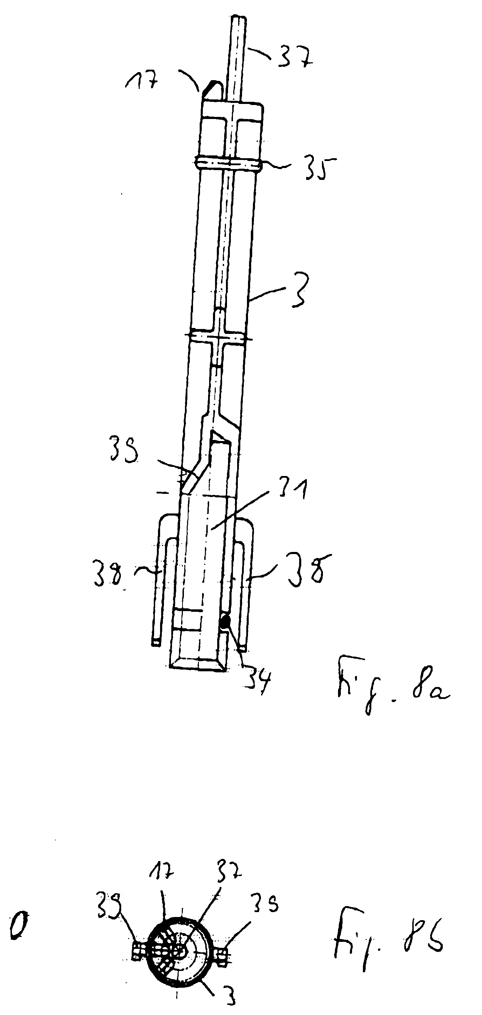

Fig. 7 zeigt eine stark vergrößerte schematische Darstellung des Bürstenkopfes der Ausführungsform des erfindungsgemäßen Bürstenteils, und zwar Fig. 7a in Seitenansicht auf die Brücke und Fig. 7b eine vereinfachte Darstellung zur Illustration der Wirksamkeit der aufgerauhten Oberfläche des Gleitlagers.

Aus Fig. 7a ist die Verrastung des Bürstenkopfes (80) in der Querbohrung (46) mittels des verrastbaren Gleitlagers - hier in Form des in die Nut 88 eingreifenden Vorsprunges - deutlich erkennbar, welche eine entsprechende axiale Fixierung bewirkt.

Wie in Fig. 7b dargestellt, weist das derart gebildete Gleitlager regelmäßig aufgerauhte zueinander gerichtete Oberflachen 100 auf, welche bewirken, daß eine axiale Pendelbewegung des Bürstenkopfes (80) in der Querbohrung (46) ermöglicht ist.

Im vorliegenden Beispiel weisen, wie aus den Ausschnittsvergrößerungen erkenntlich, die aufgerauhten Oberflächen vorstehende Elemente, insbesondere Zähne oder Wölbungen, aufweisen, welche regelmaßig angeordnet sind. Die Anordnung der vorstehenden Elemente ist dabei derart gestaltet, daß die Frequenz der Pendelbewegungen im Ultraschallbereich liegt.

Die Aufrauhung kann auch bzw. anstattdessen im Bereich 90 in Fig. 7a liegen, nämlich an der Lagerbuchse für den Stift 43.

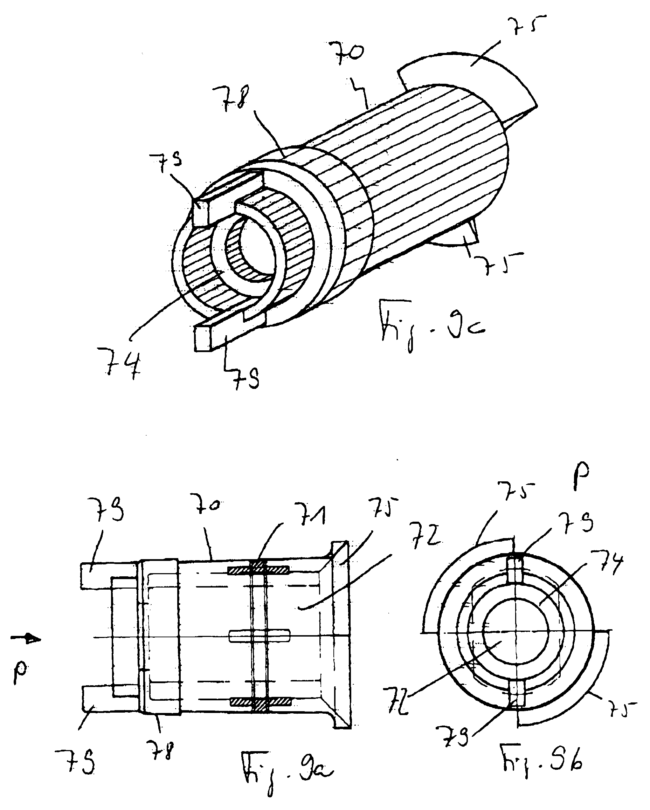

Fig. 8 ist eine schematische Darstellung der Achse einer weiteren Ausführungsform des erfindungsgemäßen Bürstenteils, und zwar Fig. 8a eine Seitenansicht und Fig. 8b eine entsprechende Draufsicht in Richtung des Pfeils O.

Bei dieser Ausführungsform ist das Aufstecken auf die Motorwelle 2 erleichtert. Es kann nämlich bei der obigen Ausführungsform vorkommen, daß der Bürstenkopf 80 zum Aufstecken gegenüber der Motorachse 2 gedreht werden muß, da die Anschrägung 21 nicht genau mit der Anschrägung 39 übereinstimmt.

Um diese Ausrichtung zu verbessern, hat die Achse 3 seitlich zwei gegenuberliegende, einseitig angebundene Flügel 38.

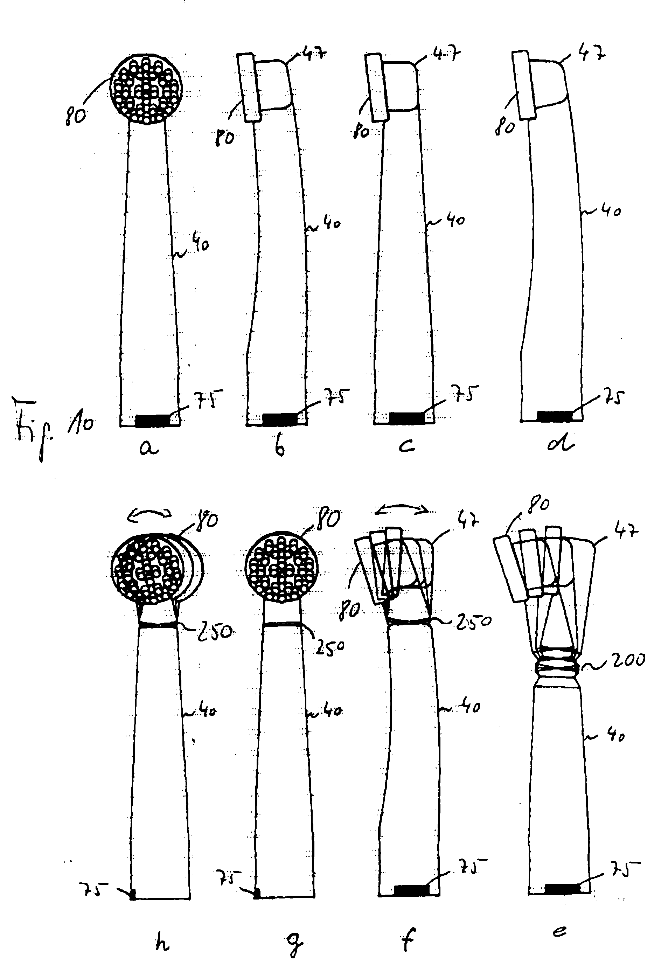

Fig. 9 ist eine schematische Darstellung des Klemmringes einer weiteren Ausführungsform des erfindungsgemäßen Bürstenteils, und zwar Fig. 9a im Schnitt, Fig. 3b eine entsprechende Draufsicht in Richtung des Pfeils P und Fig. 9c eine entsprechende perspektivische Ansicht.

Am in den Schaft 40 weisenden Ende des Klemmringes 70 sind zwei Zapfen 79 vorgesehen, die bei Verdrehung aus der Mittellage eine Rückstellkraft bewirken, da sich die Flügel 38 beim Verdrehen der Achse 3 deformieren. Entfernt man die Motorachse 2, so wird die eventuell anliegende Spannung freigegeben, und die Flügel 38 drehen die Achse 3 und damit den Bürstenkopf 80 in die Mittellage. Damit ist die Motorachse 2 bei einem erneuten Einstecken leichter in die Achse 3 einführbar.

Heutzutage bekannte, handelsübliche Handzahnbürsten weisen teilweise eine Abwinkelung auf, wodurch die Zahnbürste leichter dem Gebiß des Benutzers angepaßt gehalten und geführt werden kann. Oft haben solche Handzahnbürsten einen elastischen, leicht biegbaren Bereich, wodurch die Anpassung noch weiter verbessert werden soll. Eine derartige Ausgestaltung gibt es für Bürstenkopfe von elektrischen Zahnbürsten bisher nicht.

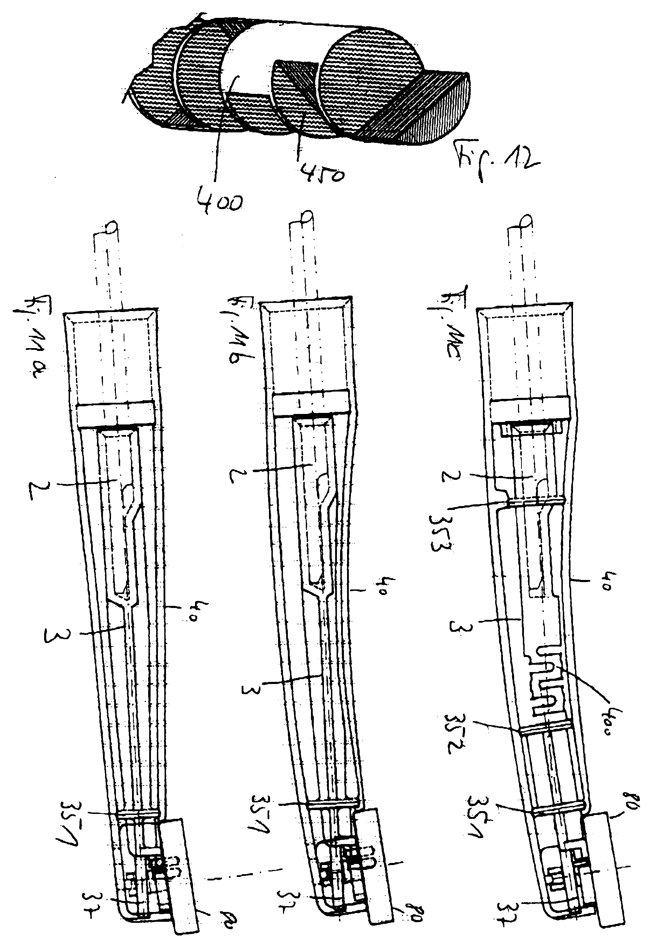

In den Figuren 10a bis 10h sind Ausführungsformen des erfindungsgemäßen Bürstenteils mit solch einer Biegung dargestellt.

Insbesondere sind hier noch die farbigen Fahnen 75, die die einzelnen Bürstenteile für die unterschiedlichen Benutzer unterscheidbar machen, verbreitert und asymmetrisch geteilt. Damit sind die Bürstenteile in jeder Lage leichter erkennbar bzw. unterscheidbar.

Der Bürstenkopf 80 nach Figur 10a und b mit dem Vorderteil 47 wurde insgesamt abgewinkelt, während gemäß Figur 10c nur der Kopf 80 mit den Borsten abgewinkelt wurde. Nach Figur 10d wurde die Form des Schaftes 40 bananenförmig gebogen.

Gemäß Figur 10e hat der Schaft 40 im Übergangsbereich zum Vorderteil 47 einen elastischen Bereich 200, der es ermöglicht, daß der Vorderteil 47 mit dem Bürstenkopf 80 durch den Anpressdruck in verschiedene Lagen abwinkelbar ist.

Gemäß Figur 10f ist zwischen dem Schaft 40 und dem Vorderteil 47 eine einachsiges Kugelgelenk 250 anstelle des elastischen Bereichs 200 vorgesehen. In Figur 10g ist der Bürstenteil von Figur 10f um 90° verdreht dargestellt.

Gemäß Figur 10h ist der Bürstenteil nach Figur 10d seitlich mit einem Kugelgelenk 250 drehbar in jede Richtung dargestellt. Dieselbe Funktion könnte auch durch entsprechende Gestaltung des Bürstenteils nach Figur 10e erreicht werden.

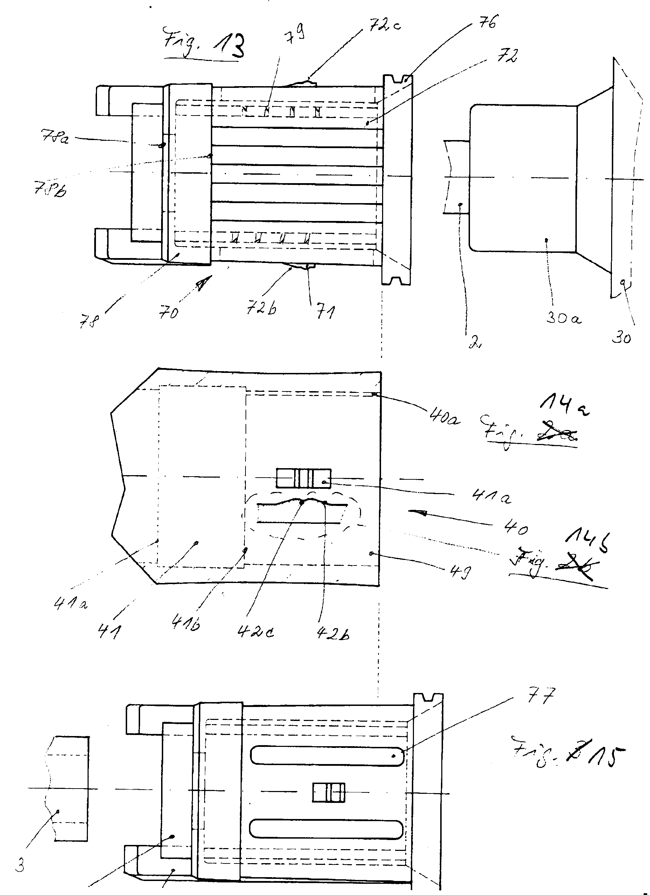

Die Darstellung nach Figur 11a entspricht dem Bürstenkopf nach Figur 10c, die Darstellung nach Figur 11b dem Bürstenkopf nach Figur 10d und die Darstellung nach Figur 11c dem Bürstenkopf nach Figur 10d mit stärker bananenförmiger Biegung und einteiliger Achse, weiche im Vorderbereich ein einfaches oder mehrfaches Kardangelenk 400 aufweist.

Figur 12 zeigt eine Detaildarstellung des Kardangelenks 400. Dieses Kardangelenk 400 ist aus einem zylindrischen Grundkörper hergestellt, welcher parallele, verdreht angeordnete Schlitze 450 aufweist. Der Schlitzbereich kann eine unterschiedliche Anzahl von Schlitzen mit unterschiedlicher Tiefe aufweisen. Mehrere Schlitzbereiche hintereinander angeordnet, ergeben eine größere Winkelverstellmöglichkeit bzw. eine geringere Materialbiegebeanspruchung des Kardanbereichs 400.

Man beachte, daß die Bürstenteile gemäß Figur 11a, b, c eine verschiedene Anzahl von verrastbaren Gleitlagern 351, 352, 353 aufweisen. Bei dem Bürstenteil gemäß Figur 11c ist eine starke Biegung vorhanden, welche durch das Kardangelenk 400 ausgeglichen wird, wobei es zweckmäßig ist, vor und hinter dem Kardangelenk 400 weitere verrastbare Gleitlagen 352 und 353 anzuordnen.

Die Winkelbewegungen des Bürstenvorderteils können damit ohne Schwierigkeiten für die Welle 2 des Antriebs der elektrischen Zahnbürste nachvollzogen werden.

Das Kardangelenk 400, welches aus dem mehrfach versetzt geschlitzten winkligen Bereich besteht, gleicht dabei den Achsversatz durch Verbiegung aus. Die Verbiegung findet in den einzelnen Schlitzen 450 und/oder den zylindrischen Bereichen statt, wobei die Materialdehnung, die ein Verbiegen ohne bleibende Verformung zuläßt, nicht überschritten werden darf. Dafür geeignete Kunststoffe sind auf dem Markt bekannt, z.B. Polypropylen.

Der in Figur 11c nicht gezeigte elastische Bereich 200 gemaß Figur 10e wird zweckmäßigerweise so angeordnet, daß das Kardangelenk 400 in seinem Zentrum sitzt. Der Achsausgleich kann somit leicht nach einer oder mehreren Seiten durch das Kardangelenk 400 erfolgen.

Das aus einem zylindrischen Grundkörper bestehende Kardangelenk wird durch die parallelen Schlitze, die jedoch verdreht angeordnet sind ausgebildet. Die Schlitztiefe ist dabei materialbezogen. Der Schlitzgrund wird sehr sorgfältig gerundet auszubilden sein, um Spannungsrisse zu verhindern. Für die Montage ist darauf zu achten, daß die Lagergrößen von der Seite des Kopfes, die die Querbohrung hat, dem Schaftende zu im Durchmesser größer werden. Der Innenraum des Schaftes 40 muß so groß sein, daß die einzelnen Lagerelemente leicht eingeschoben und montiert, werden können. Seitlich Ausweichbewegungen der Achse 3 sind während der Montage zwar tolerabel, im Endzustand sollten die Lager jedoch der Drehbewegung entsprechend fluchtend ausgerichtet sein.

Nach Figur 10d bzw. 11c fluchtet der zentrische Stift 37 der Achse 3, welcher den Kopf 80 halt, nicht. Dieser Achsversatz bewirkt, daß sowohl der Stift 37 als auch der Kopf 80 im Lochbereich 85 stärker belastet werden. Dieser Achsversatz ist jedoch entsprechend der Lebensdauer der Bürstenköpfe tolerierbar. Der Achsversatz läßt sich durch das Kardangelenk 400 vermeiden. Alternativ zu der einteiligen Achse 3 mit dem Kardangelenk 400 wäre es auch möglich, eine mehrteilige Achse mit ein- oder mehrteiligem Kardangelenk auszubilder.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere ist der Klemmring am Ende des Schaftes nicht unbedingt erforderlich, sondern ein in den Schaft eingeformtes elastisches Teil könnte dessen Funktion übernehmen. In diesem Fall ist es zweckmäßig, das der Welle zugewandte Ende dar Achse mit wenig Spiel in der Längsbohrung zu lagern.

Obwohl im Vorhergehenden von Bohrungen die Rede war, ist selbstverständlich, daß die betreffenden Teile üblicherweise nicht gebohrt werden, sondern die Bohrungen durch entsprechenden Spitzguß gefertigt werden.

Die Drehbewegung zwischen Achse und Bürstenkopf kann nicht nur mittels der genannten Zahnstangen, sondern auch über Kegelrader oder Schubstangen erzielt werden.

Durch das Gleitlager rastet die Achse formschlüssig in den Paßsitz im Schaft ein und ist axial fixiert. Um die Gleitlagerung zu verbessern, kann die Wulst der Achse aus einem Material hergestellt sein, welches sich von dem Grundmaterial der Achse unterscheidet. Möglich ist auch hier eine Anformung eines unterschiedlichen Materials in einem kombinierten Spritzgußverfahren.

Es ist ebenfalls möglich, daß die stiftartige Verlangerung der Achse durch eine Bohrung von der Stirnseite der Querbohrung durch die Brücke und in die Achse einführbar ist. Diese Einfuhrungsart ist an sich bekannt, wird aber im Stand der Technik nur dazu verwendet, einen Anschlag fetszulegen.

Fig. 13 zeigt eine schematische Darstellung des Klemmstopfens 70 des Bürstenteils 10 mit oben und unten angelängten rastenden Klemmitteln, die in Anlage zur Innenkante der Aussparung 41a in radialer Richtung wirken mit Griffstück 30, Metallachse 2 und Gehäusezapfen 30a;
Es bezeichnen 70 einen Klemmstopfen, 71 verformende ringförmige oder segmentierte Klemmittel, 72 einen Innenraum, 72b eine Schräge, 72c einen Wulst oder Nut, 74 eine Lagerbuchse, 76 eine ringförmige Anlängung, 77 eine oder mehrere Ausnehmungen oder Schlitze, 78 einen Wulst

Fig. 14 zeigt eine schematische Darstellung des Gehäuse 40 der bevorzugten Ausführungsform des erfindungsgemäßen Bürstenteils in Fig. 2a in einem senkrechten Schnitt und in Fig. 2b in einem waagrechten Schnitt;
Es bezeichnen 40 einen Schaft oder Gehäuse, 41 eine verbreiterte, ringförmige Aussparung für einen Wulst 78 (s.Fig.1), 41a verformende, ringförmige oder segmentierte Klemmittel, 42b eine Schräge, 42c eine Nut oder Wulst, 49 eine Längsbohrung

Fig. 15 zeigt eine schematische Darstellung des Klemmstopfens 70 des Bürstenteils 10 mit den Klemmmitteln 71 in Draufsicht versetzt nach rechts bis zur Innenkante der Aussparung 41b der Gehäusehülse 40, 3 eine Achse des Bürstenteils 10.

Wie aus den Figuren ersichtlich wird der Klemmstopfen 70 in das Gehäuse 40 eingeführt.
Der Klemmstopfen 70 ist innerhalb der verbreiterten, ringförmigen Aussparung 41 zwischen den Innenkanten 41a und 41b verschiebbar.
Steht der Klemmstopfen 70 mit seiner Wulstkante 78b an der Innenkante 41b des Gehäuses 40, so sind die Klemmmittel 71 und 41a nicht im Eingriff. Damit ist der Innenraum 72 offen und der Klemmstopfen 70 kann leicht aufgeschoben oder abgezogen werden von oder auf Gehäuse 30 oder Gehäusezapfen 30a.
Steht der Klemmstopfen 70 mit seiner Wulstkante 78a an der Innenkante 41a des Gehäuses 40, so sind die Klemmmittel 71 und 41a im Eingriff. Damit ist der Innenraum 72 verklemmt und verkleinert und der Klemmstopfen 70 kann nur noch unter Krafteinwirkung aufgeschoben oder abgezogen werden von oder auf Gehäuse 30 oder Gehäusezapfen 30a.
Durch entsprechende Gestaltung der Klemmmittel 41a, 71 ist es möglich die Abzugskraft des Bürstenteils 10 von dem Griffstück 30, 30a genau einzustellen.
Dazu werden die Schrägen 42b des Gehäuses 40 und die Schrägen 72b des Klemmstopfens 70 so abgestimmt, dass der Klemmstopfen 70 innerhalb des Gehäuses 70 in der Aussparung 41 leicht verschiebbar ist und beim Einschieben des Klemmstopfens 70 in das Gehäuse 40 der Innenraum 72 verkleinert wird, womit das Bürstenteil 10 auf dem Gehäuse 30, 30a aufgeklemmt wird.

Gegen eine unbeabsichtigtes Öffnen dieser Klemmung erhalten das Gehäuse 40 am Klemmittel 41a und der Klemmstopfen 70 am Klemmittel 71 eine Nut oder entsprechenden Wulst 42c und 72c, die bei Anlage der Innenkante 41 a an der Wulstkante 78a eine Verriegelung des Gehäuses 40 gegen den Klemmstopfen 70 bewirken.

Das Bürstenteil kann leicht von dem Griffteil abgezogen werden, indem man den Widerstand der Verriegelung von Nut und Wulst 42c und 72c durch Ziehen am Bürstenteil überwindet, das Gehäuse 40 von dem Gehäuse 30, 30a abzieht und damit die Klemmung durch die Klemmittel 41a und 71 aufhebt.

Der Klemmstopfen 70 kann im Innenraum 72 eine oder mehrere Rippen oder -segmente 79 erhalten, zur besserern Klemmung auf dem Gehäuse 30,30a.

Analog zu oszilierenden Achsen gibt es solche mit Hub- und/oder Pendelbewegungen. Um die oszilierende Bewegung der bevorzugten Ausführungsform zu erreichen kann ein entsprechender Adapter, der identisch auf dem Gehäuse 30,30a befestigt wird und seinerseits das Bürstenteil 10 mit entsprechender Befestigung auf seinem Gehäuse, das dem Gehäuse 30,30a entspricht, eingesetzt werden.

Zur leichteren und genaueren Einstellung der Klemmkraft durch die Klemmittel 41a und 71 kann der Klemmstopfen 70 Schlitze 77 erhalten.

Gegen eine unbeabsichtigte Verdrehung des Klemmstopfens 70 in der Bohrung 49 des Gehäuses 40 erhält der Klemmstopfen 70 eine oder mehrere Rippen 70a, die in entsprechende Ausnehmungen 40a des Gehäuses 40 in der Bohrung 49 eingreifen.

### BEZUGSZEICHENLISTE:

- 40: Schaft bzw. Gehäuse.
- 41: ringförmige Aussparung für Wulst 78
- 42: Locher
- 43: Stift
- 44: Paßsitz für Wulst 35
- 45: Nut und/oder Bohrung
- 46: Querbohrung
- 47: Vorderbereich
- 48: Ausnehmung für Fahne 75
- 49: Längsbohrung
- 70: Klemmring
- 71: elastisches Anformungsteil
- 72: Innenraum
- 73: Abflachung
- 74: Lagerbuchse
- 75: Fahne
- 78: Wulst
- 79: Zapfen
- 10: Burstenteil
- 3: Achse
- 33, 34: elastisches Anformteil
- 35: Wulst
- 37: Stift
- 17: Zahnstangen
- 31: Ausnehmung
- 38: Flugel
- 39: Anschrägung
- 80: Bürstenkopf
- 81: Borsten
- 82: Lagerbuchse für Stift 43
- 83: Anschläge
- 84: Brückenteil
- 85: Loch für Stift 37
- 86: Zahnstangen
- 88: Nut
- 89: Rippe
- 90: Bereich
- 2: Motorwelle
- 21: Anschrägung
- 22: Kerbe
- 23: Vollkreisprofil
- 24: Halbkreisprofil
- 30: Griffteil-Kopf
- 100: aufgerauhte Oberflächen
- 200: elastischer Bereich
- 250: Kugelgelenk
- 351, 352, 353: verrastbare Gleitlager
- 400: Kardangelenk
- 450: Schlitze

## Patentansprüche

1. Bürstenteil für eine elektrische Zahnbürste mit:
einem mit einem Griffteil (30) verbindbaren Schaft (40), welcher eine Längsbohrung (49) und eine Querbohrung (46) aufweist;
einer mit einer Welle (2) des Griffteils (30) verbindbaren Achse (3), welche in der Längsbohrung (49) drehfähig aufnehmbar ist:
einem Bürstenkopf (80), welcher in der Querbohrung (46) drehfahig aufnehmbar ist;
Übertragungsmitteln (17, 86) zum Übertragen der Drehbewegung der Achse (3) auf den Bürstenkopf (80);
dadurch **gekennzeichnet,** daß
daß der Bürstenkopf (80) in der Querbohrung (46) mittels eines verrastbaren Gleitlagers gelagert ist, welches eine entsprechende axiale Fixierung bewirkt und/oder die Achse (3) in der Längsbohrung (49) mittels eines verrastbaren Gleitlagers (35, 44; 88) gelagert ist.

2. Bürstenteil nach Anspruch 1, dadurch gekennzeichnet, daß das Gleitlager für den Bürstenkopf (80) in der Querbohrung (46) derart aufgerauhte Oberflächen aufweist, daß eine axiale Pendelbewegung des Bürstenkopfes (80) in der Querbohrung (46) ermöglicht ist.

3. Bürstenteil nach Anspruch 2, dadurch gekennzeichnet, daß die aufgerauhten Oberflächen vorstehende Elemente, insbesondere Zähne oder Wölbungen, aufweisen, welche regelmäßig angeordnet sind.

4. Burstenteil nach Anspruch 3, dadurch gekennzeichnet, daß die Anordnung der vorstehenden Elemente derart gestaltet ist, daß die Frequenz der Pendelbewegungen im Ultraschallbereich liegt.

5. Bürstenteil nach einem der vorhergehenden Ansprüche, dadurch gekennzeichnet, daß die Achse (3) eine vorzugsweise einteilige stiftartige Verlängerung (37) aufweist, welche in die Querbohrung (46) ragt, und daß der Bürstenkopf (80) ein Brückenteil (84) aufweist, durch das die stiftartige Verlangerung (37) steckbar ist, so daß der Bürstenkopf (80) axial in der Querbohrung (46) halterbar ist.

6. Bürstenteil nach Anspruch 5, dadurch gekennzeichnet, daß die Querbohrung (46) eine Nut (45) und/oder Bohrung zum Aufnehmen des vorderen Endes der stiftartigen Verlängerung (37) aufweist.

7. Bürstenteil nach einem der vorhergehenden Ansprüche, dadurch gekennzeichnet, daß der Bürstenkopf (80) an der den Borsten (81) abgewandten Seite eine Rippe (89) mit einer radialen Nut (88) aufweist und in der Querbohrung (46) eine mit der Nut (88) zur Bildung einer Gleitlagers zusammenwirkende Auskragung vorgesehen ist, so daß der Bürstenkopf (80) axial in der Querbohrung (46) verrastbar ist.

8. Burstenteil nach einem der vorhergehenden Ansprüche, dadurch gekennzeichnet, daß die Übertragungsmittel (17, 86) zum Übertragen der Drehbewegung der Achse (3) auf den Bürstenkopf (80) an der Achse (3) und an der den Borsten (81) abgewandten Seite des Bürstenkopfes (80) vorgesehene ineinandergreifende Zahnrader (17, 86) aufweisen.

9. Bürstenteil nach einem der vorhergehenden Ansprüche, dadurch gekennzeichnet, daß die Achse (3) an eine Ausnehmung (31) zum Aufnehmen der Welle (2) des Griffteils (30) aufweist und in die Ausnehmung (31) vorzugsweise elastische Klemmittel (33, 34) zum axialen Fixieren der Welle (2) eingearbeitet sind.

10. Bürstenteil,nach Anspruch 9, dadurch gekennzeichnet, daß die Klemmittel (33, 34) ein oder mehrere angeformte Elemente (33, 34) aufweisen, welche eine Elastizität aufweisen, die von derjenigen der Achse (3) verschieden ist.

11. Burstenteil nach Anspruch 9 oder 10, dadurch gekennzeichnet, daß die Ausnehmung (31) eine angeschrägte Abflachung (39) zur formschlüssigen Aufnahme des Endes der Welle (2) aufweist.

12. Bürstenteil nach Anspruch 9, 10 oder 11, dadurch gekennzeichnet, daß die Welle (2) eine Kerbe (22) aufweist, welche mit den Klemmmitteln (33, 34) zur axialen Halterung in Eingriff bringbar ist.

13. Bürstenteil nach einem der vorhergehenden Ansprüche, dadurch gekennzeichnet, daß ein Klemmring (70) vorgesehen ist, welcher an der der Querbohrung (46) abgewandten Seite in den Schaft (40) einführbar ist und welcher eine Lagerbuchse (74) aufweist, in der das Ende der Achse (3) lagerbar ist.

14. Bürstenteil nach Anspruch 10, dadurch gekennzeichnet, daß die Lagerbuchse (74) und das Ende der Achse (3) über ein verrastbares Gleitlager miteinander verbindbar sind.

15. Burstenteil nach Anspruch 14, dadurch gekennzeichnet, daß der Klemmring (70) auf seiner Außenseite eine Wulst (78) aufweist, welche in einer entsprechenden inneren Ausnehmung (41) des Schafts (40) verrastbar ist.

16. Burstenteil nach Anspruch 13, 14 oder 15, dadurch gekennzeichnet, daß dar Klemmmring (70) auf seiner Innenseite eine Abflachung (73) zur formschlüssigen Aufnahme des Kopfes des Griffteils (30) aufweist, wodurch eine radiale Fixierung des Schaftes (40) gegenüber dem Kopf (30) erzielbar ist.

17. Bürstenteil nach einem der Anspruch 12 bis 16, dadurch gekennzeichnet, daß der Klemmmring (70) einen oder mehrere angelängte Fahnen (75) aufweist, welche formschlüssig in entsprechende Ausnehmungen (48) am Ende des Schaftes (40) einbringbar sind.

18. Bürstenteil nach einem der Ansprüche 12 bis 17, dadurch gekennzeichnet, daß der Klemmmring (70) ein oder mehrere angeformte Elemente (71) zur Verbindung mit dem Kopf (30) aufweist, welche eine Elastizität aufweisen, die von derjenigen des Klemmringes (70) verschieden ist.

19. Burstenteil nach Anspruch 18, dadurch gekennzeichnet, daß das oder die angeformten Elemente (71) eine radiale und/oder axiale Fixierung gegenüber dem Kopf des Griffteils (30) bewirken.

20. Burstenteil nach einem der vorhergehenden Ansprüche, dadurch gekennzeichnet, daß der Bürstenkopf (80) Anschläge (83) zu Begrenzung der Drehbewegung in der Querbohrung (46) aufweist.

21. Burstenteil nach einem der vorhergehenden Ansprüche, dadurch gekennzeichnet, daß der Bürstenkopf (80) zumindest bereichsweise mit schwermetallhaltigen Substanzen beschichtet, vorzugsweise bedampft, ist.

22. Bürstenteil nach einem der vorhergehenden Ansprüche, dadurch gekennzeichnet, daß der Bürstenkopf (80) an seiner den Borsten (81) abgewandten Seite eine Lagerbuchse (82) aufweist, in die ein am Boden der Querbohrung (46) vorgesehener Führungsstift (43) einsetzbar ist.

23. Bürstenteil nach einem der vorhergehenden Ansprüche 12 bis 22, dadurch gekennzeichnet, daß der Klemmring (70) zumindest bereichsweise eine vom Schaft (3) verschiedene Farbe aufweist.

24. Bürstenteil nach einem der vorhergehenden Ansprüche, dadurch gekennzeichnet, daß der Klemmring (70) mindestens einen, und vorzugsweise zwei, Zapfen (79) aufweist und die Achse (3) seitlich mindestens einen, und vorzugsweise zwei, gegenüberliegende, einseitig angebundene Flügel (38) hat, welche zum Erzeugen einer Rückstellkraft auf die Achse (3) zur Positionierung in eine Mittellage zusammenwirken.

25. Bürstenteil nach einem der vorhergehenden Ansprüche, dadurch gekennzeichnet, daß der Schafte (40) eine Biegung aufweist.

26. Burstenteil nach einem der vorhergehenden Ansprüche, dadurch gekennzeichnet, daß im Übergangsbereich zum Vorderbereich des Schaftes (40) ein elastischer Bereich (200) und/oder ein Kugelgelenk (250) vorgesehen ist, welche eine Verbiegung um eine oder mehrere Achsen ermöglichen.

27. Bürstenteil nach einem der vorhergehenden Ansprüche, dadurch gekennzeichnet, daß die Achse (3) ein Kardangelenk (400) aufweist.

28. Burstenteil nach Anspruch 27, dadurch gekennzeichnet, daß das Kardangelenk (400) einen im wesentlichen länglichen Grundkörper mit einer Anzahl winkelmäßig gegeneinander verdrehter Schlitze (450) aufweist.

29. Bürstenteil nach Anspruch 1, dadurch gekennzeichnet, dass das Bürstenteil (10) in seinem Gehäuse (40) eine drehbar gelagerte, auf die Achse des Gehäuse (30, 30a) klemmend aufsteckbare Achse (2) enthält.

30. Bürstenteil nach Anspruch 1, dadurch gekennzeichnet, dass die Einzelteile des Bürstenteils einzeln austauschbar sind.

31. Bürstenteil nach Anspruch 1, dadurch gekennzeichnet, dass der Klemmstopfen (70) in seinem Innenraum (72) eine oder mehrere radial angeordnete Rippen (79) enthält, die durch die Klemmwirkung der Klemmittel (41a und 71) an oder in das Gehäuse (30, 30a) gepresst sind.

32. Bürstenteil nach Anspruch 1, dadurch gekennzeichnet, dass der Klemmstopfen (70) aus weichem oder hartem Material hergestellt ist, welches durch das Material des Gehäuses (30) und durch die Klemmkraft der Klemmittel (41a und 71) elastisch verformbar ist oder seinerseits das Material des Gehäuses (30, 30a) verformt.

33. Bürstenteil nach Anspruch 1, dadurch gekennzeichnet, dass der Klemmstopfen (70) gegenüber bisher verwendeten Klemmstopfen verlängerten Wulst (78) erhält, der die in diesem Wulst drehbar gelagerte Achse (3) auch in geöffneten Zustand, wenn die Klemmittel (41a und 71) nicht im Eingriff sind, drehbar lagert.

34. Bürstenteil nach Anspruch 1, dadurch gekennzeichnet, dass der Klemmstopfen (70) in der Aussparung (41) rastend gelagert ist und nur mit Kraft aus einem Hinterschnitt, den die Innenkante (41b) und die Wulstkante (78b) bilden, herausgedrückt werden kann.

35. Bürstenteil nach Anspruch 1, dadurch gekennzeichnet, dass der Klemmstopfen (70) an seinem nach außen gelagerten Ende eine Anlängung (76) erhält, die farblich verschiedengestaltete Ringe aufnehmen kann.

36. Bürstenteil nach Anspruch 1, dadurch gekennzeichnet, dass zwischen Bürstenteil (10) und Gehäuse (30, 30a) ein Adapter billigster Bauweise eingesetzt wird, der es gestattet die verschiedenen Dreh- und/oder Hubbewegungen der Metallachse (2) verschiedenster Hersteller des Griffteils in eine oszillierende Drehbewegung umzusetzen wie das Bürstenteil (10) vorzugsweise eine durch verschiebbare Klemmittel (ähnlich 41a und 71) ausgerüstete Befestigung am einen Ende des Gehäuses (30, 30a) aufweist.

37. Bürstenteil nach Anspruch 1, dadurch gekennzeichnet, dass der Klemmstopfen (70) in seinem Innenraum (72) eine oder mehrere Rippen (79) aufweist.

38. Bürstenteil für eine Zahnbürste nach Anspruch 1 dadurch gekennzeichnet, dass im Bereich des Borstenträgers und der Borsten oligodynamische Materialen aufgedampft, und/oder Zusatz in Klebe- und/oder Füllmitteln und/oder Borsten auf- und/oder eingebracht werden.
